# EUROPEAN PATENT APPLICATION

(11) **EP 4 546 308 A1**
(43) Date of publication of application: **30.04.2025**
(21) Application number: 24207819.4
(22) Date of filing: 21.10.2024
(51) Int. Cl.: G09B 9/12

(54) **SIMULATION DEVICE**

(30) Priority: 24.10.2023 IT 202300022281
(71) Applicant: Ambusim S.r.l., 43122 Parma (IT)
(72) Inventor: AL CHIDIAC, Carlos, I-43122 PARMA (IT); PRINI, Alessio, I-43122 PARMA (IT); CECI, Samuele, I-43122 PARMA (IT)
(74) Representative: Zanardelli, Davide

(57) **Abstract**

The present invention relates to a simulation device (1) suitable for simulating the movements produced by a means of transport during a journey. This simulation device (1) is suitable for resting on a base plane (B) and comprises a plurality of actuators (6a, 6b, 6c) and a plurality of support legs (2a, 2b, 2c) respectively provided with a universal coupler (5) and a carriage group (7a; 7b; 7c). Each leg (2a; 2b; 2c) of the plurality of support legs (2a, 2b, 2c) extends along a leg axis (L).

The universal coupler (5) is suitable for connecting each leg (2a; 2b; 2c) to a simulation platform (3).

Each actuator (6a; 6b; 6c) of the plurality of actuators (6a, 6b, 6c) is operatively connected to a respective leg (2a; 2b; 2c) of the plurality of support legs (2a, 2b, 2c) .

The carriage group (7a; 7b; 7c) is suitable for connecting each leg (2a; 2b; 2c) to the respective actuator (6a; 6b; 6c).

The plurality of support legs (2a, 2b, 2c) is oriented so that the leg axis (L) of each leg (2a; 2b; 2c) converges towards the base plane (B).

## Description

The present invention relates to a simulation device; in particular, the present invention relates to a simulation device suitable for simulating the movements, in particular the vibrations, produced by a means of transport during a journey by land, air or water.

As is known, any means of transport is subject to vibrations during its motion, regardless of whether it is a means of transport moving on land, water or air.

Anyone on board the vehicle (e.g., passengers, on-board operators, pilots/drivers, etc.) experiences the vibrations produced during the journey of the means of transport. In addition to being detrimental to mechanics (motor, frame, welds, bolted joints, etc.), the vibrations are also particularly annoying for a human being.

For example, the driving of pilots/motorists, or more generally of drivers, may be negatively influenced by the presence of oscillations, vibrations, surges and/or jolts.

Furthermore, when operators are present on board the means of transport-who are forced to perform urgent, imperative tasks which, moreover, also require attention-the vibrations and oscillations due to motion complicate the activity of the operators.

Because of the critical conditions due to the movement of the means of transport, the tasks performed by the operators may be poorly performed or in any case not performed to a professional standard.

By way of example, reference is made to firefighters carrying out their duties using means of land (fire engine, tanker vehicle, crane truck, etc.), air (waterbombers, helicopters, etc.) and water (pump motorboat, etc.) transport.

A further example is represented by emergency healthcare professionals (e.g., nurses, doctors, etc.) serving on ambulances, helicopters and patrol boats. In order to save a patient's life, these healthcare professionals are forced to perform complex first aid procedures in a critical situation of severe physical and emotional stress, which is further exacerbated by the motion of the means of transport and in particular by the presence of vibrations.

In order to train healthcare professionals to act in a timely manner also on a means of transport during the transfer of a patient to a hospital, simulation devices have been developed which allow the movements-such as oscillations and/or vibrations, experienced by the means of transport during a journey by land, air or water-to be reproduced.

By virtue of such simulation devices, it is possible to train healthcare professionals, so that they may become familiar with the oscillations, vibrations and more generally any type of movement due to the means of transport during travel, to learn to perform emergency maneuvers even in conditions of precarious or unstable equilibrium.

An example of a simulation device is described in KR101656936B1, where a simulation platform is moved by six legs.

Disadvantageously, the simulation device disclosed in KR101656936B1 is radially bulky, as the legs engage a perimeter edge of the simulation platform and anchor on the ground away from the vertical axis of the platform. Furthermore, the simulation device illustrated in KR101656936B1 is developed in height in a non-negligible way and, when a structure suitable for reproducing the cabin of an ambulance is mounted on the simulation platform, a space capable of containing the vertical dimensions of the device is necessary. Therefore, the simulation platform is at a greater height than the chassis of a means of transport and therefore, in addition to being cumbersome, it is also unrealistic.

Furthermore, KR101656936B1 describes a device to simulate the driving of an ambulance and in no way relates to the training and education of healthcare professionals.

Further examples of simulation platforms are illustrated in WO2010/068089A1, US2005/277092A1, JP2011021681A and US2022/273100A1.

The object of the present invention is to propose a simulation device for training the personnel on board and/or driving a means of transport, so that they may work professionally and safely even in the presence of movements, for example oscillations and/or vibrations, due to the motion of the means of transport. Furthermore, the present invention proposes to at least partially overcome the aforementioned drawbacks in relation to simulation devices according to the prior art.

Said object is achieved with a simulation device according to claim 1. The dependent claims describe preferred embodiments of the invention.

The features and advantages of the simulation device according to the invention will nevertheless be made apparent from the following description of preferred embodiments thereof, provided purely by way of nonlimiting example, with reference to the accompanying figures, wherein:
- Fig. 1 is a perspective view of a simulation device in a first embodiment;
- Fig. 2 is a perspective view of the simulation device in a second embodiment;
- Fig. 2a is a plan view from above of the simulation device of Fig. 2;
- Fig. 2b is an elevation view of the simulation device of Fig. 2;
- Fig. 3 is a perspective view of the simulation device in a third embodiment;
- Fig. 3a is an elevation view of the simulation device of Fig. 3;
- Fig. 3b is an elevation view of the simulation device of Fig. 3 according to a different angle than that of Fig. 3a;
- Fig. 4 is a perspective view of the simulation device in a fourth embodiment;
- Fig. 4a is a plan view from above of the simulation device of Fig. 4; and
- Fig. 4b is an elevation view of the simulation device of Fig. 4.

In the following description, elements common to the various embodiments represented in the drawings are indicated with the same reference numerals.

In said drawings, a simulation device according to the invention has been indicated in its entirety with 1.

Such a simulation device 1 is suitable for simulating movements, for example oscillations and/or vibrations, produced by a means of transport during a journey via land, air or water.

The simulation device 1 is suitable for resting on a base plane B. Preferably, when the simulation device 1 is in operating conditions, the base plane B is horizontal.

Furthermore, the simulation device 1 comprises a plurality of support legs 2a, 2b, 2c, and each leg 2a; 2b; 2c of said plurality of support legs 2a, 2b, 2c extends mainly along a leg axis L between a lower end 2a'; 2b'; 2c' and an opposing upper end 2a"; 2b"; 2c".

At the upper end 2a"; 2b"; 2c" of each leg 2a; 2b; 2c of the plurality of support legs 2a, 2b, 2c a universal coupler 5 is positioned which is suitable for connecting each leg 2a; 2b; 2c with a simulation platform 3. Therefore, the simulation device 1 also comprises the universal coupler 5.

In addition to the aforesaid universal coupler 5, the simulation device 1 comprises a plurality of actuators 6a, 6b, 6c, and each actuator 6a; 6b; 6c of said plurality of actuators 6a, 6b, 6c is operatively connected to a respective leg 2a; 2b; 2c of the plurality of support legs 2a, 2b, 2c. Preferably, each actuator 6a; 6b; 6c connects to the respective leg 2a; 2b; 2c at the lower end 2a'; 2b'; 2c'.

Finally, the simulation device 1 comprises a carriage group 7a; 7b; 7c which connects each leg 2a; 2b; 2c to the respective actuator 6a; 6b; 6c of the plurality of actuators 6a, 6b, 6c. In particular, the carriage group 7a; 7b; 7c is configured as a simple kinematic constraint (i.e., a carriage) which is not translatable parallel to a vertical axis V.

The plurality of support legs 2a, 2b, 2c is oriented so that the leg axis L of each leg 2a; 2b; 2c converges toward the base plane B. In other words, the leg axes L of the support legs 2a, 2b, 2c converge towards the base plane B.

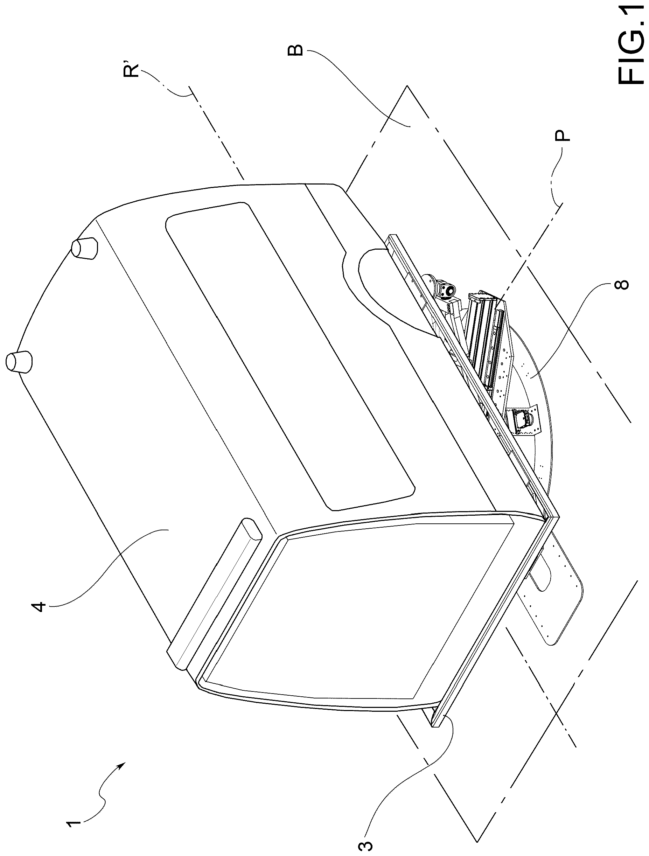

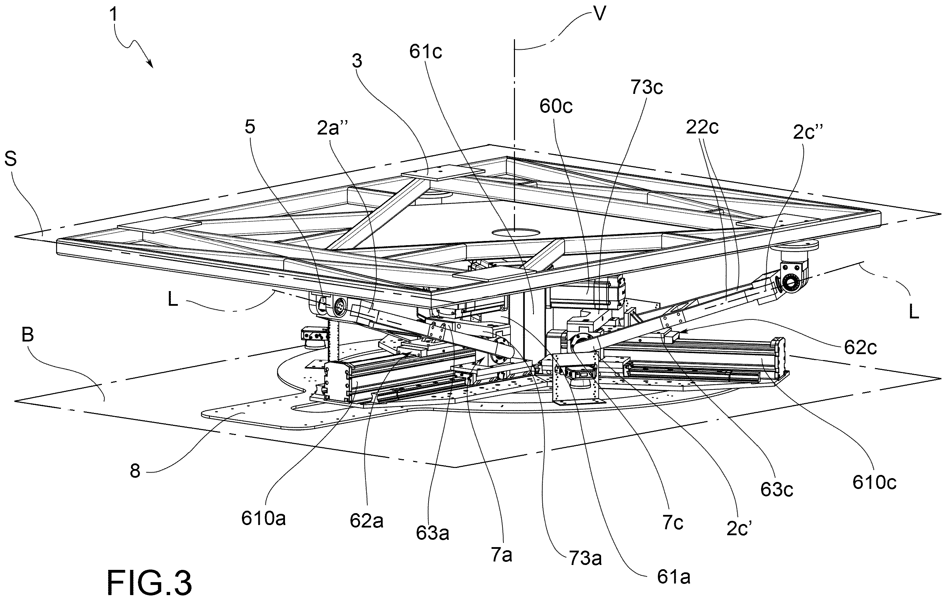

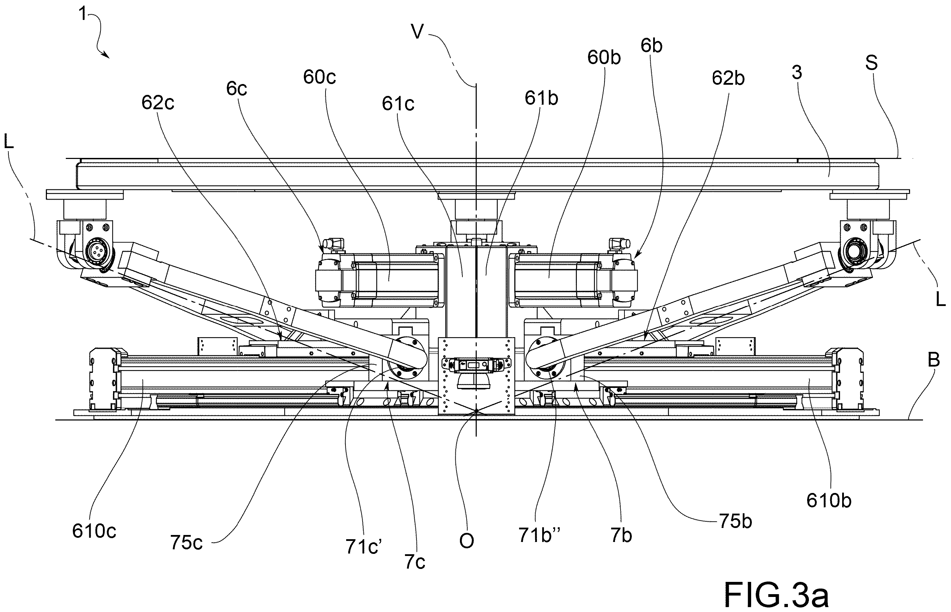

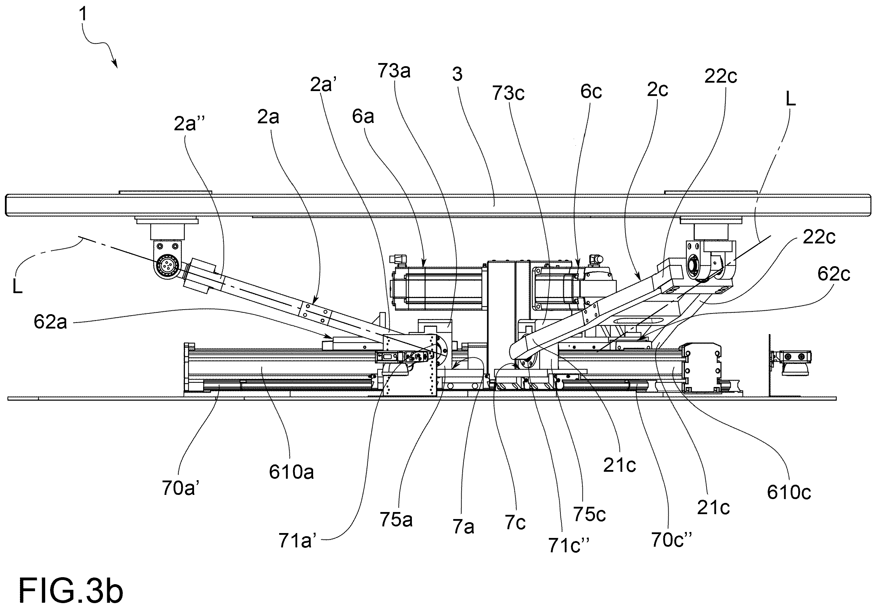

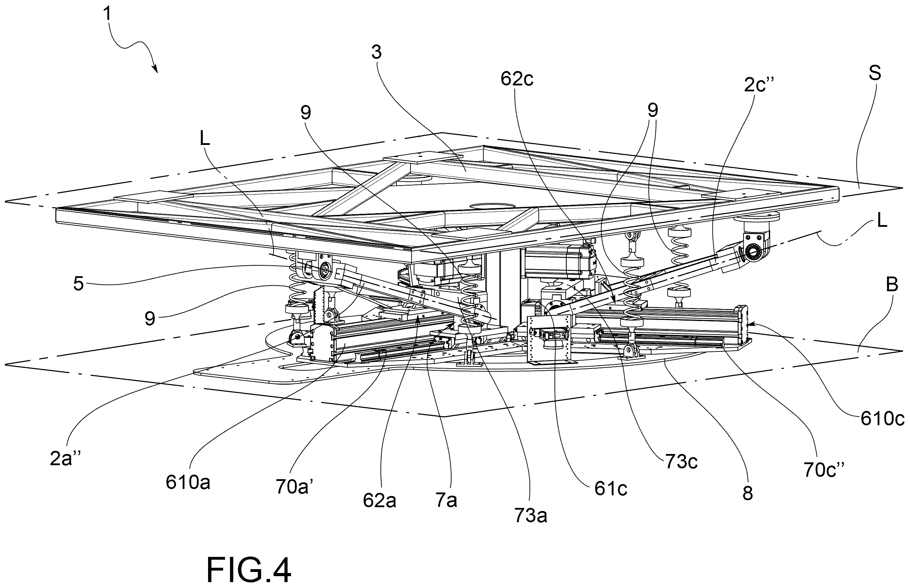

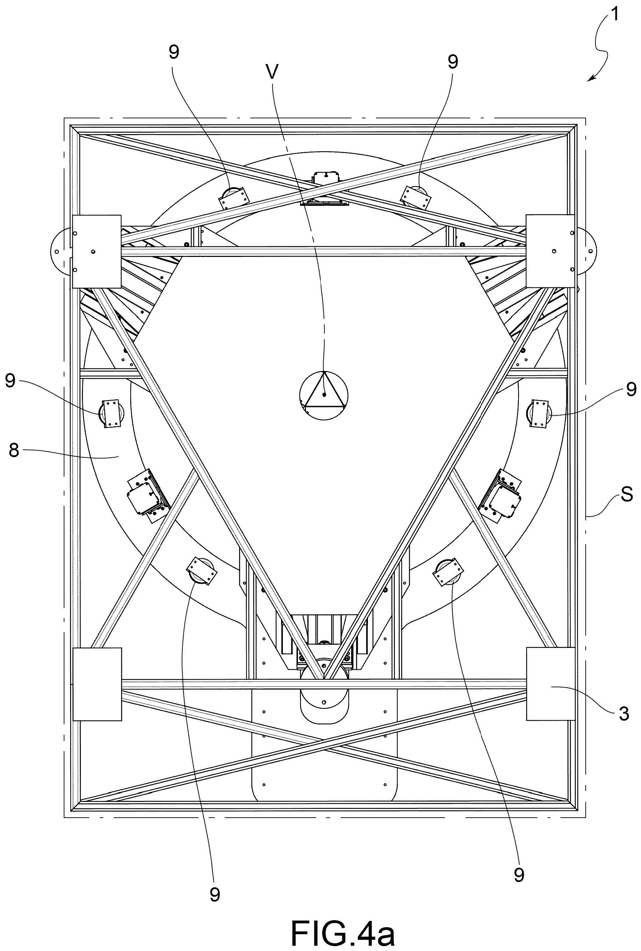

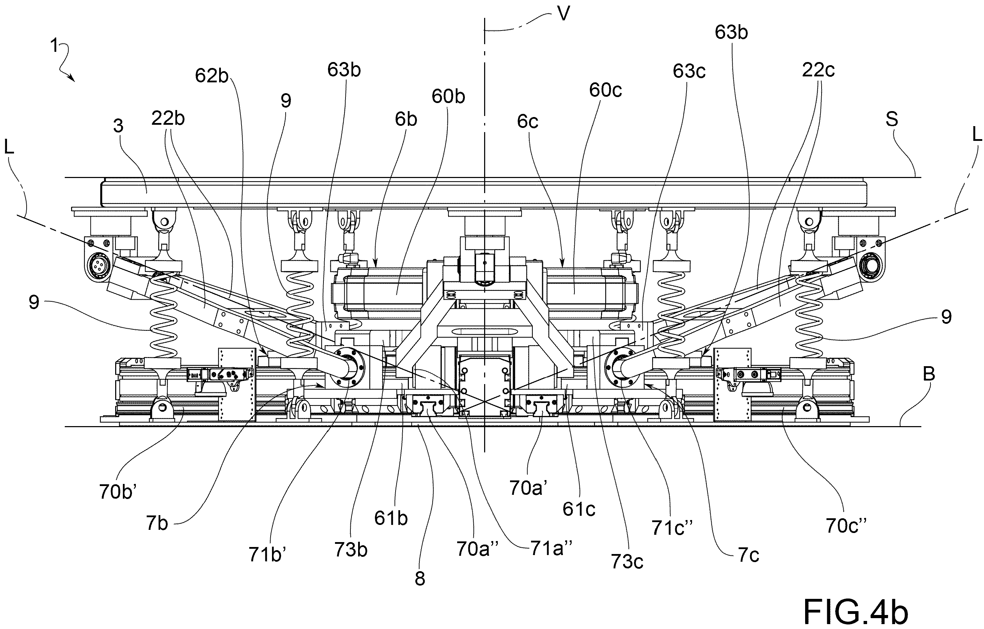

According to an embodiment illustrated in the accompanying Fig. 1, 3-3b and 4-4b, the simulation device 1 comprises a simulation platform 3 operatively connected to the plurality of support legs 2a, 2b, 2c. Preferably, the simulation platform 3 connects to the plurality of support legs 2a, 2b, 2c at the upper end 2a"; 2b"; 2c" of each leg 2a; 2b; 2c.

The simulation platform 3 defines a simulation plane S configured for the installation of a structure 4 suitable for replicating the means of transport. Therefore, the plurality of support legs 2a, 2b, 2c is oriented so that the leg axis L of each leg 2a; 2b; 2c converges towards the base plane B and therefore diverges towards the simulation plane S. In other words, the leg axes L of the support legs 2a, 2b, 2c converge towards the base plane B and diverge towards the simulation plane S.

Preferably, observing the simulation device 1 from above, the simulation platform 3 has a radial footprint such that the plurality of support legs 2a, 2b, 2c does not protrude beyond the peripheral edge of the simulation platform 3. In other words, the support legs are entirely positioned below the simulation platform 3.

According to an embodiment, the plurality of support legs 2a, 2b, 2c exactly consists of three angularly equally spaced legs.

Preferably, the leg axis L of each leg 2a; 2b; 2c converges toward a point of origin O.

This point of origin O lies on the base plane B; alternatively, the point of origin O is spaced apart from the base plane B, i.e., it does not lie on said base plane B.

Preferably, the point of origin O lies on the vertical axis V orthogonal to the base plane B.

In this case, the simulation device 1 has radial symmetry in relation to the vertical axis V of the third order. "Radial symmetry of the third order" means that, by projecting each leg 2a; 2b; 2c onto the base plane B, the three legs are arranged according to the vertices of an equilateral triangle, wherein the point of origin O is configured as the center of radial symmetry. Therefore, the projection of each leg portion 2a; 2b; 2c on the base plane B has a radial development that moves away from the vertical axis V.

For the purposes of this discussion and unless otherwise specified, the expressions "radial development", "radial footprint", "radial translation/movement" and the like are to be understood to be generally oriented along a direction orthogonal to the vertical axis V.

According to one embodiment, the universal coupler 5 connecting the simulation platform 3 to the upper end 2a"; 2b"; 2c" of each leg 2a; 2b; 2c is a universal joint. Alternatively, the universal coupler 5 is a ball joint.

According to one embodiment, a lower fork 21a; 21b; 21c is formed at the lower end 2a'; 2b'; 2c' of each leg 2a; 2b; 2c. Furthermore, the lower fork 21a; 21b; 21c of each leg 2a; 2b; 2c is operatively connected to the respective carriage group 7a; 7b; 7c. Analogously, an upper fork 22a; 22b; 22c operatively connected to the respective universal coupler 5, is obtained at the upper end 2a"; 2b"; 2c" of each leg 2a; 2b; 2c.

According to one embodiment, each carriage group 7a; 7b; 7c comprises at least one rail 70a'; 70a"; 70b'; 70b"; 70c'; 70c". Preferably, each carriage group 7a; 7b; 7c comprises a pair of rails 70a', 70a"; 70b', 70b"; 70c', 70c".

This at least one rail 70a'; 70a"; 70b'; 70b"; 70c'; 70c" allows the radial translation of the lower end 2a'; 2b'; 2c' of the respective leg 2a; 2b; 2c.

According to one embodiment, the carriage group 7a; 7b; 7c comprises at least one tapered roller bearing 71a'; 71a"; 71b'; 71b"; 71c'; 71c".

Such at least one tapered roller bearing 71a'; 71a"; 71b'; 71b"; 71c'; 71c" allows the lower end 2a'; 2b'; 2c' of the respective leg 2a; 2b; 2c to rotate about a rotation axis R.

In particular, the rotation axis R of each leg 2a; 2b; 2c is orthogonal to the lower fork 21a; 21b; 21c.

The lower end 2a'; 2b'; 2c' of each leg 2a; 2b; 2c is constrained to the respective carriage group 7a; 7b; 7c, and therefore each carriage group 7a; 7b; 7c allows the respective leg 2a; 2b; 2c to translate along the rail 70a'; 70a"; 70b'; 70b"; 70c'; 70c" and to rotate with respect to the rotation axis R.

The simulation device 1 has three Degrees of Freedom (DoF) and allows pitching and rolling movements; moreover, the simulation device 1 may also vary its height, measured along the vertical axis V with respect to the base plane B. In particular, the pitching movement occurs about a pitching axis P, while the rolling movement occurs about a rolling axis R' (Fig. 1).

According to one embodiment, each carriage group 7a; 7b; 7c comprises a pair of tapered roller bearings 71a', 71a"; 71b', 71b"; 71c', 71c". In other words, the at least one tapered roller bearing 71a'; 71a"; 71b'; 71b"; 71c'; 71c" of each carriage group 7a; 7b; 7c is a pair of tapered roller bearings 71a', 71a"; 71b', 71b"; 71c', 71c".

Furthermore, each carriage group 7a; 7b; 7c also comprises a crosspiece 73a; 73b; 73c, which connects the pair of tapered roller bearings 71a', 71a"; 71b', 71b"; 71c', 71c" and is oriented parallel to the rotation axis R.

Preferably, each carriage group 7a; 7b; 7c comprises a pair of blocks 75a; 75b; 75c, and in each block of said pair of blocks 75a; 75b; 75c a seat is obtained where a respective tapered roller bearing of the pair of tapered roller bearings 71a', 71a"; 71b', 71b"; 71c', 71c" is accommodated. The two blocks of the pair of blocks 75a; 75b; 75c are connected to one another by the crosspiece 73a; 73b; 73c and translate on the respective pair of rails 70a', 70a"; 70b', 70b"; 70c', 70c". Furthermore, each block of the pair of blocks 75a; 75b; 75c is integral with the outer ring of the respective tapered roller bearing. On the other hand, the inner ring of each tapered roller bearing is connected to the lower fork 21a; 21b; 21c. The rotation of the inner ring of the tapered roller bearing confers rotation to the respective leg 2a; 2b; 2c by means of the lower fork 21a; 21b; 21c; on the other hand, the translation along the pair of rails of the respective pair of blocks 75a; 75b; 75c allows the leg 2a; 2b; 2c to move radially.

Specifically, the lower fork 21a; 21b; 21c of each leg 2a; 2b; 2c is integrally coupled to the inner ring of each tapered roller bearing of the respective pair of tapered roller bearings 71a', 71a"; 71b', 71b"; 71c', 71c". On the other hand, the crosspiece 73a; 73b; 73c is rigidly connected to the outer ring of each tapered roller bearing of the respective pair of tapered roller bearings 71a', 71a"; 71b', 71b"; 71c', 71c" by means of the pair of blocks 75a; 75b; 75c.

In one embodiment, each actuator 6a; 6b; 6c of the plurality of actuators 6a, 6b, 6c is an independent linear actuator, i.e., the motion of each actuator is unsconstrained by that of the other actuators of the plurality of actuators 6a, 6b, 6c.

In particular, the plurality of actuators 6a, 6b, 6c is in a number equal to the plurality of support legs 2a, 2b, 2c.

Furthermore, each actuator 6a; 6b; 6c comprises a motor 60a; 60b; 60c, motion return means 61a; 61b; 61c and a shoe 62a; 62b; 62c.

Preferably, the motion return means 61a; 61b; 61c comprise a worm screw and a belt, for example a toothed belt, to connect the motor 60a; 60b; 60c to the worm screw. Furthermore, the motion return means 61a; 61b; 61c also comprise a hollow profile 610a; 610b; 610c within which the worm screw is accommodated.

The shoe 62a; 62b; 62c is actuated by the motor 60a; 60b; 60c through the motion return means 61a; 61b; 61c. This shoe 62a; 62b; 62c is operatively connected to the respective carriage group 7a; 7b; 7c so as to guide the radial translation of the leg 2a; 2b; 2c.

Preferably, the shoe 62a; 62b; 62c engages with the worm screw and, driven by the motor 60a; 60b; 60c, slides along the hollow profile 610a; 610b; 610c.

Preferably, the plurality of actuators 6a, 6b, 6c also has radial symmetry with respect to the vertical axis V of the third order. In fact, the motors 60a, 60b, 60c and the hollow profiles 610a, 610b, 610c are oriented along the vertices of an equilateral triangle.

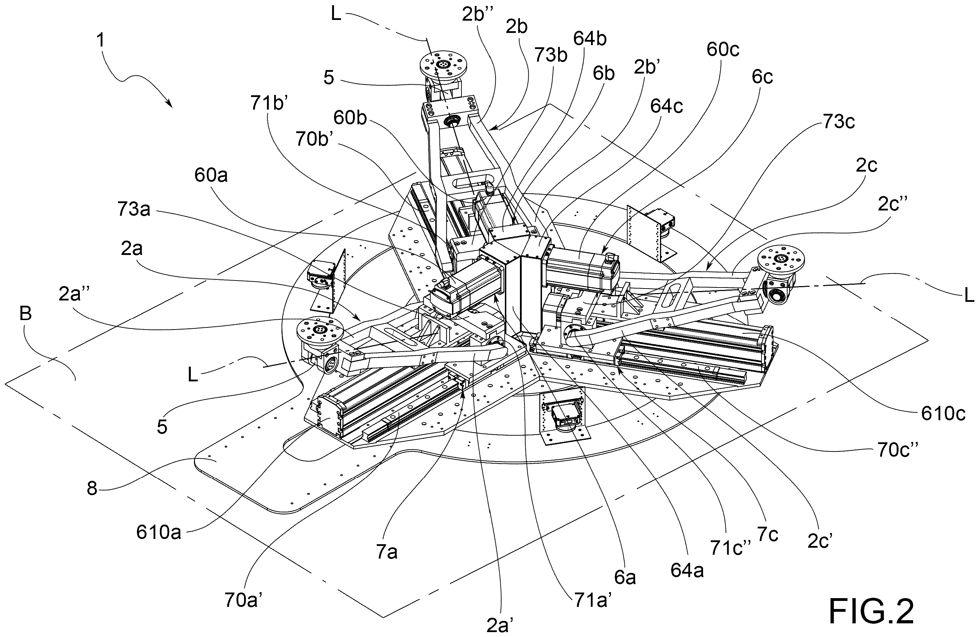

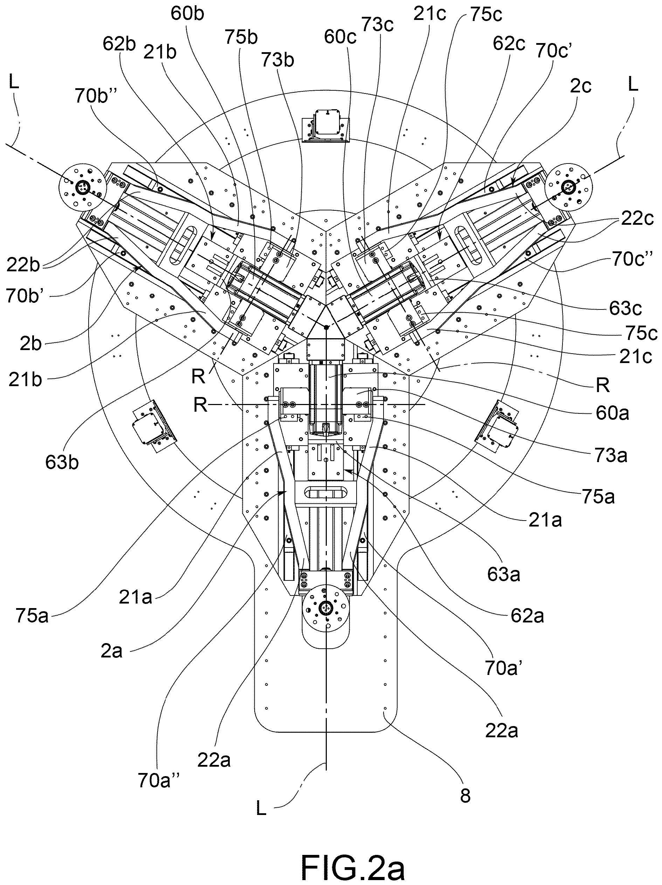

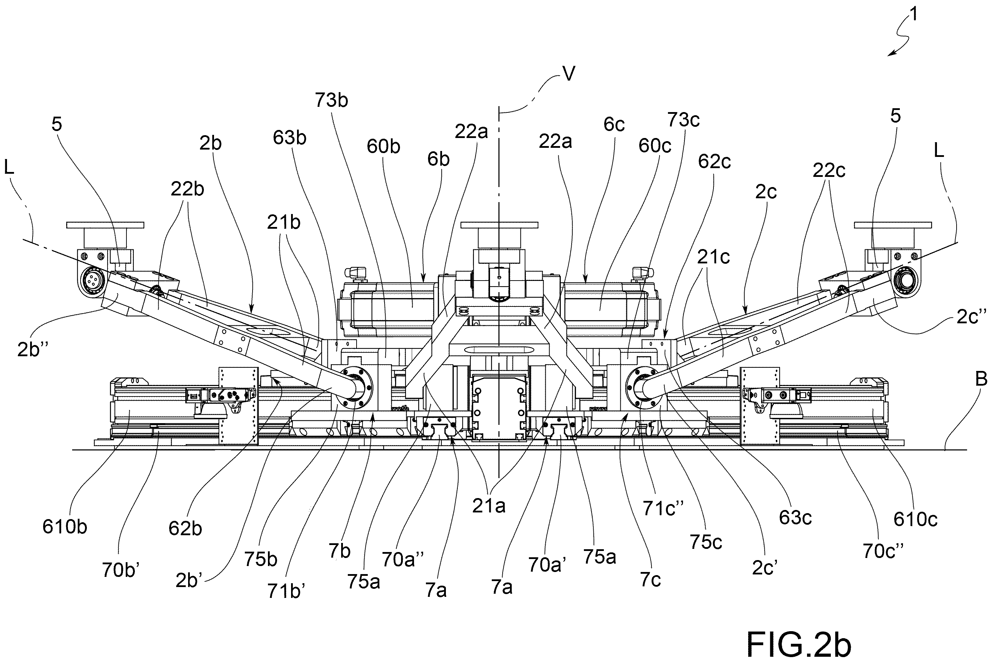

In one embodiment, the motion return means 61a; 61b; 61c comprise a box-shaped casing 64a; 64b; 64c oriented mainly along a direction parallel to the vertical axis V (Fig. 2). In particular, the belt that connects the motor 60a; 60b; 60c to the worm screw is accommodated in the aforementioned box-shaped casing 64a; 64b; 64c. This box-shaped casing 64a; 64b; 64c is proximal to the vertical axis V, while the motor 60a; 60b; 60c and the hollow profile 610a; 610b; 610c protrude radially from the box-shaped casing 64a; 64b; 64c moving away from the aforesaid vertical axis V.

The center of gravity (otherwise known as the center of mass) of the actuators 6a, 6b, 6c is positioned in proximity to the box-shaped casing 64a; 64b; 64c, i.e., it is proximal to the vertical axis V.

According to one embodiment, each shoe 62a; 62b; 62c comprises a bracket 63a; 63b; 63c and optionally a bar, for example a threaded bar.

Preferably, the bracket 63a; 63b; 63c is a T- or L-shaped angular bracket and is optionally provided with reinforcing ribs.

The engagement between the shoe 62a; 62b; 62c and the respective carriage group 7a; 7b; 7c is achieved by engaging the bracket 63a; 63b; 63c with the crosspiece 73a; 73b; 73c. Alternatively, if the threaded bar is present, the engagement between the shoe 62a; 62b; 62c and the respective carriage group 7a; 7b; 7c is achieved by engaging the threaded bar with the crosspiece 73a; 73b; 73c.

According to an alternative embodiment, each actuator 6a; 6b; 6c comprises a connecting rod-crank system, or a linear motor, operatively connected to the respective carriage group 7a; 7b; 7c, so as to guide the radial translation of the leg 2a; 2b; 2c.

According to one embodiment, the simulation device 1 also comprises a support frame 8 suitable for resting on the base plane B.

Furthermore, the simulation device 1 comprises resilient means 9 for connecting the support frame 8 to the simulation platform 3 and therefore reducing the load borne by the plurality of actuators 6a, 6b, 6c.

According to one embodiment, the resilient means 9 are coil springs. Preferably, the simulation device 1 comprises at least three coil springs; even more preferably, six or nine coil springs.

Alternatively, the resilient means 9 are hydraulic or pneumatic suspensions.

In one embodiment, the simulation platform 3, when arranged parallel to the base plane B, may reach a minimum height-measured along the vertical axis V-of between 50 and 75 cm. Preferably, the simulation platform 3-arranged parallel to the base plane B-may be positioned at a height of between 50 and 150 cm; even more preferably, between 75 and 120 cm. Therefore, the simulation device 1 may be arranged at a height, measured with respect to the base plane, which is comparable to that of a pneumatic tire.

Thus, the height of the simulation platform 3 is comparable to the height of the chassis of the means of transport; therefore, the simulation device 1 is extremely realistic and, for example, may be used to train the personnel in loading/unloading a stretcher.

According to one embodiment, the simulation device 1 also comprises a processing and control unit. This processing and control unit may:
- receive as input from an external operator a plurality of accelerations experienced by the means of transport during a land, air or water journey. The plurality of accelerations may be organized into a database, text file, table or any other data presentation method known from the prior art, or may be manually inserted by the external operator;
- calculate the plurality of accelerations using an analytical model that simulates the motion of the means of transport;
- estimate the plurality of accelerations by means of a statistical model that formulates a hypothesis for the movement of the means of transport.

After calculating, estimating and/or receiving as input the plurality of accelerations experienced by the means of transport while traveling, the processing and control unit converts these accelerations into actuation instructions with which it commands the movement of each actuator 6a; 6b; 6c. The actuation of the plurality of actuators 6a, 6b, 6c determines the movement of each leg 2a; 2b; 2c, so that the structure 4 undergoes the accelerations-calculated, estimated and/or received as input-and therefore reproduces the motion of the means of transport. In other words, by means of the processing and control unit, the accelerations experienced by a means of transport during a journey are first obtained; subsequently, these accelerations are converted into actuation instructions for controlling the plurality of actuators 6a, 6b, 6c in order to reproduce the same motion of the means of transport on the structure 4. The plurality of accelerations reproduced with the simulation device 1 allows for training the personnel on board the structure 4, as the body of each human being on the structure 4 may perceive the same vestibular sensations, i.e., the same accelerations, that he would experience during a journey on the means of transport.

Therefore, the processing and control unit is configured to obtain the plurality of accelerations experienced by the means of transport during a journey via land, air or water. This plurality of accelerations is received as input or calculated and/or estimated. The processing and control unit is also configured to convert the plurality of accelerations into actuation instructions and to control the movement of each actuator 6a; 6b; 6c by means of these instructions. The movement of the plurality of actuators 6a, 6b, 6c causes the movement of each leg 2a; 2b; 2c so as to allow the simulation device 1 to reproduce the plurality of accelerations and thus simulate the travel of the means of transport.

Innovatively, the simulation device of the present invention fully achieves the intended object thereof. In this case, the simulation platform moves and transfers motion to the structure (for example the cabin of an ambulance, aircraft or watercraft). In this way, the operators inside the structure may experience-in a protected context-the movements (e.g., oscillations, vibrations, jolts, etc.) that they would have to endure during a journey by land, air or water.

Advantageously, the leg axis of each leg converges towards the base plane and diverges towards the simulation plane; therefore, the support legs are entirely positioned below the simulation platform. In this way, the radial dimensions of the simulation device are defined by the geometry of the platform and not by the radial dimensions of the support legs.

According to an advantageous aspect, the motion of each actuator is independent from that of the other actuators, and therefore it is possible to adjust the movement of the simulation device through pitching, rolling and height variation movements.

According to a still further advantageous aspect, the tapered roller bearing makes it possible to correct any misalignments that occur during the operation of the simulation device due to the load of the structure applied to the simulation platform.

Advantageously, the resilient means lighten the stresses borne by the plurality of actuators. Therefore, in the presence of the resilient means, it is possible to reduce the dimensions of the plurality of actuators.

According to a further advantageous aspect, while maintaining the dimensions of the plurality of actuators, the presence of the resilient means may increase the maximum load that may be supported by the simulation device.

Advantageously, the presence of the resilient means may further reduce the minimum height achievable by the simulation platform.

According to an advantageous aspect, the simulation device may support a maximum load of about 3000 kilograms, preferably 2000 kilograms.

According to a further advantageous aspect, the simulation device that is the subject of the present invention has a lower weight than similar devices designed in accordance with the prior art.

Advantageously, the simulation device is cost-effective, as it requires lower production costs than similar devices currently on the market.

To the forms of embodiment of the simulation device according to the invention, a person skilled in the art - to meet contingent needs - may make modifications, adaptations and replacements of elements with functionally equivalent ones, without leaving the scope of protection of the following claims. Each of the features described as belonging to a possible embodiment may be obtained independently in the other described embodiments.

## Claims

1. A simulation device (1) suitable for simulating movements, such as oscillations and/or vibrations, generated by a means of transport during a journey by land, air or water, said simulation device (1) being suitable for resting on a base plane (B), wherein the simulation device (1) comprises:
- a plurality of support legs (2a, 2b, 2c), where each leg (2a; 2b; 2c) of said plurality of support legs (2a, 2b, 2c) mainly extends along a leg axis (L) between a lower end (2a'; 2b'; 2c') and an opposing upper end (2a"; 2b"; 2c");
- a universal coupler (5) positioned at the upper end (2a"; 2b"; 2c") of each leg (2a; 2b; 2c) of the plurality of support legs (2a, 2b, 2c) and suitable for connecting each leg (2a; 2b; 2c) to a simulation platform (3);
- a plurality of actuators (6a, 6b, 6c), where each actuator (6a; 6b; 6c) of said plurality of actuators (6a, 6b, 6c) is operatively connected to a respective leg (2a; 2b; 2c) of the plurality of support legs (2a, 2b, 2c);
- a carriage group (7a; 7b; 7c) for connecting each leg (2a; 2b; 2c) to the respective actuator (6a; 6b; 6c) of the plurality of actuators (6a, 6b, 6c),
wherein the plurality of support legs (2a, 2b, 2c) is oriented so that the leg axis (L) of each leg (2a; 2b; 2c) converges towards the base plane (B).

2. Simulation device (1) according to the preceding claim, further comprising a simulation platform (3) operatively connected to the plurality of support legs (2a, 2b, 2c), said simulation platform (3) defining a simulation plane (S) configured to install a structure (4) suitable for replicating the means of transport.

3. Simulation device (1) according to the preceding claim, wherein the plurality of support legs (2a, 2b, 2c) consists of exactly three equally angularly spaced legs.

4. Simulation device (1) according to any one of the preceding claims, wherein the universal coupler (5) connecting the simulation platform (3) to the upper end (2a"; 2b"; 2c") of each leg (2a; 2b; 2c) is a universal joint.

5. Simulation device (1) according to any one of the preceding claims, wherein a lower fork (21a; 21b; 21c) is obtained at the lower end (2a'; 2b'; 2c') of each leg (2a; 2b; 2c), said lower fork (21a; 21b; 21c) being operatively connected to the respective carriage group (7a; 7b; 7c).

6. Simulation device (1) according to any one of the preceding claims, wherein each carriage group (7a; 7b; 7c) comprises at least one rail (70a'; 70a"; 70b'; 70b"; 70c'; 70c"), preferably a pair of rails (70a', 70a"; 70b', 70b"; 70c', 70c"), said rail (70a'; 70a"; 70b'; 70b"; 70c'; 70c") allowing the radial translation of the lower end (2a'; 2b'; 2c') of the leg (2a; 2b; 2c).

7. Simulation device (1) according to any one of the preceding claims, wherein the carriage group (7a; 7b; 7c) comprises at least one tapered roller bearing (71a'; 71a"; 71b'; 71b"; 71c'; 71c"), said tapered roller bearing (71a'; 71a"; 71b'; 71b"; 71c'; 71c") allowing the lower end (2a'; 2b'; 2c') of the leg (2a; 2b; 2c) to rotate about a rotation axis (R).

8. Simulation device (1) according to the preceding claim, wherein the at least one tapered roller bearing (71a'; 71a"; 71b'; 71b"; 71c'; 71c") of each carriage group (7a; 7b; 7c) is a pair of tapered roller bearings (71a', 71a"; 71b', 71b"; 71c', 71c"), and wherein each carriage group (7a; 7b; 7c) also comprises a crosspiece (73a; 73b; 73c) connecting the pair of tapered roller bearings (71a', 71a"; 71b', 71b"; 71c', 71c") and is oriented parallel to the rotation axis (R).

9. Simulation device (1) according to any one of the preceding claims, wherein each actuator (6a, 6b, 6c) of the plurality of actuators (6a, 6b, 6c) is an independent linear actuator comprising:
i) a motor (60a; 60b; 60c);
ii) motion return means (61a; 61b; 61c), for example, said motion return means (61a; 61b; 61c) comprising a worm screw and a belt for connecting the motor (60a; 60b; 60c) to the worm screw;
iii) a shoe (62a; 62b; 62c) actuated by the motor (60a; 60b; 60c) through the motion return means (61a; 61b; 61c), said shoe (62a; 62b; 62c) being operatively connected to the respective carriage group (7a; 7b; 7c) so as to guide the radial translation of the leg (2a; 2b; 2c) .

10. Simulation device (1) according to claims 8 and 9, wherein each shoe (62a; 62b; 62c) comprises a bracket (63a; 63b; 63c) and optionally a bar, the engagement between the shoe (62a; 62b; 62c) and the respective carriage group (7a; 7b; 7c) being obtained by the engagement between the bracket (63a; 63b; 63c) and the crosspiece (73a; 73b; 73c).

11. Simulation device (1) according to any one of the preceding claims in combination with claim 2, also comprising a support frame (8) to rest on the base plane (B), said simulation device (1) further comprising resilient means (9) for connecting the support frame (8) to the simulation platform (3) and reducing the load sustained by the plurality of actuators (6a, 6b, 6c).

12. Simulation device (1) according to the preceding claim, wherein said resilient means (9) are coil springs.

13. Simulation device (1) according to any one of the preceding claims, comprising a processing and control unit configured to obtain a plurality of accelerations experienced by the means of transport during a journey by land, air or water, said plurality of accelerations being received as input or calculated and/or estimated, wherein said processing and control unit is configured also to convert the plurality of accelerations into actuation instructions and to control the movement of each actuator (6a; 6b; 6c) by means of said actuation instructions, the movement of the plurality of actuators (6a, 6b, 6c) causing the movement of each leg (2a; 2b; 2c) so as to allow the simulation device (1) to replicate the plurality of accelerations.
